Europäisches Patentamt

European Patent Office

Office européen des brevets

(19)

(11) Veröffentlichungsnummer: **0 342 342 B1**

(12)                    **EUROPÄISCHE PATENTSCHRIFT**

(45) Veröffentlichungstag der Patentschrift:
04.12.91 Patentblatt 91/49

(51) Int. Cl.⁵: **F16L 27/10, F16L 51/02**

(21) Anmeldenummer: **89105741.6**

(22) Anmeldetag: **01.04.89**

(54) **Vorrichtung zum elastischen Verbinden.**

(30) Priorität: **18.05.88 DE 3816851**

(43) Veröffentlichungstag der Anmeldung:
**23.11.89 Patentblatt 89/47**

(45) Bekanntmachung des Hinweises auf die
Patenterteilung:
**04.12.91 Patentblatt 91/49**

(84) Benannte Vertragsstaaten:
**AT BE CH DE ES GB IT LI NL**

(56) Entgegenhaltungen:
**DE-A- 2 138 966**
**DE-A- 2 321 143**

(73) Patentinhaber: **H. Krantz GmbH & Co.**
**Krantzstrasse 7**
**W-5100 Aachen (DE)**

(72) Erfinder: **Heckmann, Horst, Dipl.-Ing.**
**Kapitelstrasse 10**
**W-5100 Aachen (DE)**
Erfinder: **Kropp, Günter, Dipl.-Ing.**
**Hostetstrasse 5 a**
**W-5190 Stolberg (DE)**

(74) Vertreter: **Bauer, Hubert, Dipl.-Ing.**
**Am Keilbusch 4**
**W-5100 Aachen (DE)**

## Beschreibung

Die Erfindung betrifft eine Vorrichtung zum elastischen Verbinden von zwei Bauteilen mit unterschiedlichem schwingungstechnischem Verhalten, beispielsweise zum elastischen Verbinden eines Kanals mit einem Ventilator. Die Vorrichtung besteht aus einer flexiblen Manschette, die mit einem Randstreifen ihres einen Endes an das eine Bauteil und mit einem Randstreifen ihres anderen Endes an das andere Bauteil anschließbar ist.

Derartige Vorrichtungen sind allgemein bekannt und verhindern in wirksamer Weise die unerwünschte Übertragung von Schwingungen des einen Bauteils auf das andere Bauteil. Der beidseitige Manschettenanschluß erfordert jedoch einen verhältnismäßig großen Aufwand, insbesondere wenn die Manschette in möglichst einfacher Weise dicht anschließbar sein soll. Diese Forderung stellt sich insbesondere bei Manschetten, die ein Leitungsstück bilden sollen, um beispielsweise einen Kanal und einen Ventilator miteinander zu verbinden.

Eine aus der DE-A-2321143 bekannte Vorrichtung der eingangs beschriebenen Art besteht aus einem an einer Kante eines Leitungsabschnittes anliegenden und an dieser befestigbaren inneren Element mit einer Grundplatte und einem sich von der Grundplatte weg erstreckenden Flansch. Dieser setzt sich aus einem ersten und zweiten zueinander winklig angeordneten Abschnitt zusammen. Weiterhin ist ein äußeres, in das innere Element einfügbares Element mit einer Grundplatte und zwei im wesentlichen im rechten Winkel von der Grundplatte abstehenden Flanschen vorgesehen. Die Flansche sind wiederum winklig zueinander angeordnet. Schließlich erfordert die bekannte Vorrichtung zur Sicherung und Befestigung der inneren und äußeren Elemente gegeneinander und an den Flanschen oder Kanten der Leitungsabschnitte zusätzliche Verbindungsorgane.

Diese bekannte Vorrichtung ist infolge der zahlreichen Einzelbauteile nicht nur kostspielig in der Herstellung, sondern auch zeitaufwendig in der Montage.

Der Erfindung liegt die Aufgabe zuzgrunde, eine Vorrichtung der eingangs beschriebenen Art so auszubilden, daß ein dichter Manschettenanschluß mit einfachen und auch leicht zu handhabenden Mitteln bewerkstelligt werden kann.

Zur Lösung dieser Aufgabe wird von einer Vorrichtung der im Oberbegriff des Anspruchs 1 genannten gattungsgemäßen Art ausgegangen, welche erfindungsgemäß die im kennzeichnenden Teil desselben angegebenen Merkmale aufweist.

Durch die erfindungsgemäße Ausbildung der Vorrichtung lassen sich unter dichter Verpressung der Manschettenrandstreifen diese durch die L-förmigen Winkelstücke an dem jeweiligen, aus U-förmigen Winkelprofilen gebildeten Rahmen festlegen, indem die Winkelstücke in den Winkelprofilen eines Rahmens eingeklipst werden. Für den Anschluß der Manschette an die Bauteile sind darüber hinaus keine weiteren Befestigungsmittel erforderlich.

Nach einer besonders vorteilhaften Ausgestaltung der Erfindung ist zwischen einer Kante des U-förmig umgebogenen Randstreifens des parallel zur Bauteillängsachse ausgerichteten Schenkels des den Rahmen bildenden Winkelprofils und einer Kante des betreffenden Schenkels des Winkelstücks ein Spalt vorgesehen. Dabei entspricht die Breite des Spalts der Materialstärke der Manschette im elastisch verpreßten Zustand. Eine Kante des U-förmig umgebogenen Randstreifens des senkrecht zur Bauteillängsachse ausgerichteten Schenkels des den Rahmen bildenden Winkelprofils liegt unter Spannung gegen den Randstreifen des betreffenden Schenkels des Winkelstücks an.

Bei der erfindungsgemäßen Vorrichtung sollte das Winkelstück im spannungsfreien Zustand vorzugsweise einen 90° geringfügig überschreitenden Öffnungswinkel aufweisen, so daß sich im eingeklipsten Zustand der Öffnungswinkel verkleinert und eine entsprechend elastische Vorspannung vom Winkelstück auf das Winkelprofil als Druckkraft ausgeübt wird.

Um beispielsweise für den Fall, daß die Bauteile aus einem Ventilator und einem Kanalstück bestehen, die Zugänglichkeit zu den Winkelstücken von außen aus zu gewährleisten, sieht eine Ausgestaltung der Erfindung noch vor, daß die jeweils senkrecht zur Kanallängsachse ausgerichteten Schenkel des Winkelprofils und jedes Winkelstücks radial nach außen vorstehen und einen Verbindungsflansch bilden, der über Schrauben oder Klemmstücke mit einem entsprechenden Verbindungsflansch am Stutzen des Ventilators bzw. am Kanal verbindbar ist.

In der Zeichnung ist ein Ausführungsbeispiel der erfindungsgtemäßen Vorrichtung dargestellt. Es zeigen:

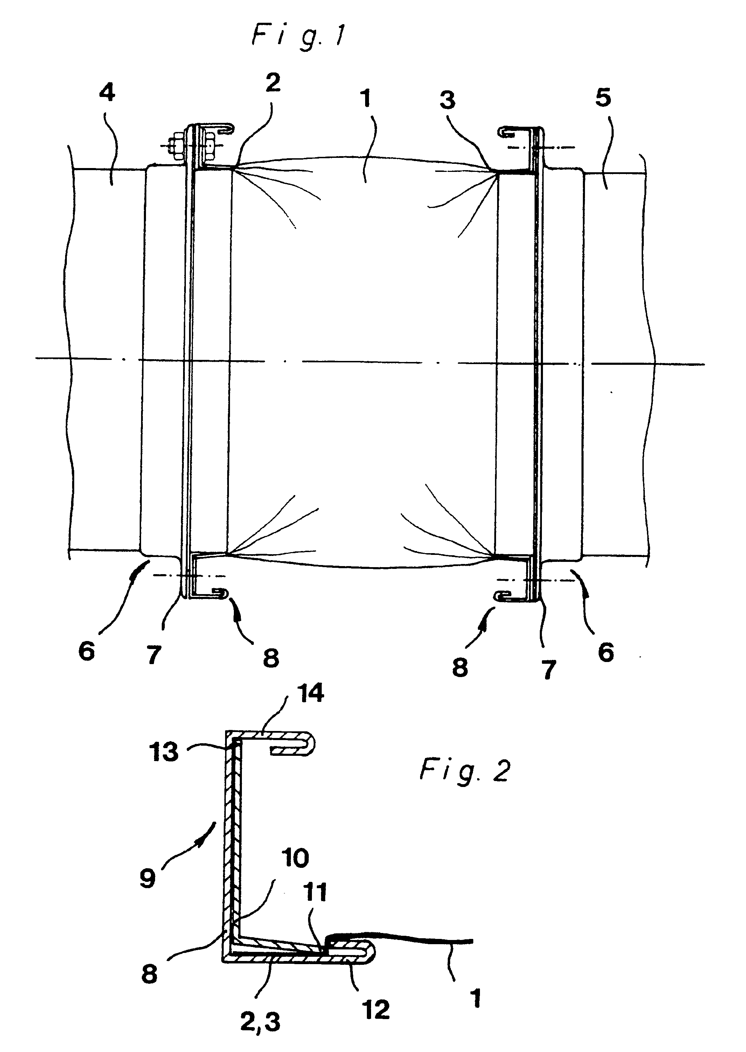

Fig. 1  eine Seitenansicht der Vorrichtung ;

Fig. 2  in gegenüber Fig. 1 vergrößertem Maßstab einen Querschnitt durch ein Winkelprofil und ein darin eingesetztes Winkelstück mit einem Randstreifen einer Manschette.

2

Eine Manschette 1 ist mit ihren Randstreifen 2 und 3 an einen Stutzen 4 eines nicht dargestellten Ventilators bzw. an das Ende einer Rohrleitung 5 angeschlossen.

Der Stutzen 4 und die Rohrleitung 5 sind jeweils an den einander zugewandten Enden mit einem Rahmen aus Winkelprofilen versehen, wobei radial nach außen vorstehende Schenkel 7 einen Anschlußflansch bilden.

Jedem Anschlußflansch ist ein Rahmen 8 zugeordnet, der in konventioneller Weise mit dem Anschlußflansch verschraubbar ausgebildet sein kann. An dem Rahmen 8 ist einer der Randstreifen 2 bzw. 3 der Manschette 1 befestigt. Der Rahmen 8 besteht dazu aus Winkelprofilen 9, worin gleichsinnig Winkelstücke 10 eingeklipst sind, mit denen der Randstreifen 2 bzw. 3 an dem betreffenden Schenkel des Rahmens 8 festgelegt wird.

Jedes Winkelstück 10 hat einen geringfügig 90° überschreitenden Öffnungswinkel, so daß sich unter Vorspannung entlang einer Kante 11 des Winkelstücks 10 die Manschette 1 gegen einen U-förmig umgebogenen Randstreifen 12 des Winkelprofils 9 quetschen läßt, während eine Kante 13 gegen einen gleichfalls U-förmig umgebogenen Randstreifen 14 des Winkelstücks 9 gepreßt wird.

Durch diese Ausbildung und Anordnung der Winkelprofile 9 und der Winkelstücke 10 erhält die Manschette 1 mit einfachen Mitteln einen dichten und stabilen Anschluß an den Stutzen 4 und die Rohrleitung 5.

## Patentansprüche

1. Vorrichtung zum elastischen Verbinden von zwei Bauteilen mit unterschiedlichem schwingungstechnischem Verhalten, bestehend aus einer flexiblen Manschette, die mit einem Randstreifen ihres einen Endes an das eine Bauteil und mit einem Randstreifen ihres anderen Endes an das andere Bauteil anschließbar ist, dadurch gekennzeichnet, daß jeder Randstreifen (2, 3) der Manschette (1) zwischen einem aus U-förmigen Winkelprofilen (8) gebildeten Rahmen (9) und in den Winkelprofilen (8) gleichsinnig eingeklipsten L-förmigen Winkelstücken (10) verpreßt ist, wobei jeder Schenkel des den Rahmen (9) bildenden Winkelprofils (8) mit seinen beiden Randstreifen (12, 14) U-förmig umgebogen ist und jeweils gegen einen Randstreifen (11, 13) der Winkelstücke (10) weist.

2. Vorrichtung nach Anspruch 1, dadurch gekennzeichnet, daß zwischen einer Kante des U-förmig umgebogenen Randstreifens (12) des parallel zur Bauteillängsachse ausgerichteten Schenkels des den Rahmen (9) bildenden Winkelprofils (8) und einer Kante (11) des betreffenden Schenkels des Winkelstücks (10) ein Spalt vorgesehen ist, dessen Breite der Materialstärke der Manschette (1) im elastisch verpreßten Zustand entspricht, und daß eine Kante (13) des senkrecht zur Bauteillängsachse ausgerichteten Schenkels des Winkelstücks (10) unter Spannung gegen den betreffenden U-förmig umgebogenen Randstreifen des Winkelprofils (8) anliegt.

3. Vorrichtung nach Anspruch 1 oder 2, dadurch gekennzeichnet, daß die jeweils senkrecht zur Bauteillängsachse ausgerichteten Schenkel des Winkelprofils (8) und jedes Winkelstücks (10) radial nach außen vorstehen und einen Verbindungsflansch bilden, der über Schrauben oder Klemmstücke mit einem entsprechenden Verbindungsflansch (6) am Stutzen (4, 5) der zu verbindenden Bauteile anschließbar ist.

## Claims

1. Device for the elastic connection of two assembly components of different relative vibration of behaviour, comprising a flexible sleeve, which is connected by means of the edge strip at the one end to the one assembly component, and by means of the edge strip at the other end to the other assembly component, characterised in that each edge strip (2, 3) of the sleeve (1) is compressed between a frame, which is composed of U-shaped angled profiles (8), and angled portions (10), which are clipped in the same direction into the angled profiles (8), whereby each shank of the angled profile (8) which forms the frame (9) is bent into a U-shape with both its edge strips (12, 14) to point at a respective edge strip (11, 13) of the angled portions (10).

2. Device according to claim 1, characterised in that a gap is provided between an edge of the U-shaped bent edge strip (12) of the shank, which is oriented along the longitudinal axis of the assembly component and is part of the angled profile (8) forming the frame (9), and an edge (11) of the respective shank of the angled portion (10), which gap corresponds to the material thickness of the sleeve in its elastically compressed state, and in that one edge (13) of the shank of the angled portion, which is oriented vertically to the longitudinal axis of the assembly component, abuts under tension against the respective U-shaped bent edge strip of the angled profile.

3. Device according to claim 1 or 2, characterised in that the shanks which are oriented vertically to the longitudinal axis of the assembly component, of the angled profile (8) and of each angled portion (10), project radially outwards and form a connecting flange which is connected by means of bolts or clamping means to a respective connecting flange (6) at the sockets (4, 5) of the assembly components to be connected.

**Revendications**

1. Dispositif pour relier de manière élastique deux éléments de construction ayant des comportements vibratoires différents, composé d'une manchette flexible qui peut être raccordée à l'un des éléments de construction par un bord de l'une de ses extrémités, et à l'autre élément de construction par un bord de son autre extrémité, caractérisé en ce que chaque bord (2, 3) de la manchette (1) est pressé entre un cadre (9) formé de profilés angulaires (8) et des cornières (10) en L (10) clipsées dans le même sens dans les profilés angulaires (8), chaque aile du profilé angulaire (8) formant le cadre (9) ayant ses deux bords extrêmes (12, 14) repliés en U et venant chaque fois en regard d'un bord (11, 13) de la cornière (10).

2. Dispositif selon la revendication 1, caractérisé en ce qu'il est prévu entre un côté du bord replié en U (12) de l'aile du profilé angulaire (8) formant le cadre (9) qui se trouve parallèle à l'axe longitudinal de l'élément de construction et un côté (11) de l'aile correspondante de la cornière (10), une fente dont la largeur correspond à l'épaisseur du matériau de la manchette (1) à l'état pressé de manière élastique, et qu'un côté (13) de l'aile de la cornière (10) qui se trouve perpendiculaire à l'axe longitudinal de l'élément de construction s'appuie sous tension contre le bord replié en U correspondant du profilé angulaire (8).

3. Dispositif selon la revendication 1 ou 2, caractérisé en ce que l'aile du profilé angulaire (8) et celle de chaque cornière (10), qui s'étendent chaque fois perpendiculairement à l'axe longitudinal de l'élément de construction, s'étendent en sens radial vers l'extérieur et forment une bride de raccordement qui peut être reliée au moyen de vis ou de pièces de serrage à une bride de raccordement correspondante (6) sur le support (4, 5) de l'élément de construction à raccorder.

Fig. 1

Fig. 2